# EUROPEAN PATENT SPECIFICATION

(11) **EP 0 694 771 B1**
(45) Date of publication and mention of the grant of the patent: **22.12.1999**
(21) Application number: 95109975.3
(22) Date of filing: 27.06.1995
(51) Int. Cl.: G01J 5/60, G01J 5/08

(54) **An optical monitoring apparatus**
Vorrichtung zur optischen Überwachung
Dispositif de contrôle optique

(30) Priority: 29.06.1994 DE 4422414
(43) Date of publication of application: 31.01.1996
(73) Proprietor: ORFEUS Combustion Engineering GmbH, 22453 Hamburg (DE)
(72) Inventor: Wintrich, Franz; Dipl.-Ing., D-45130 Essen (DE); Wintrich, Hartmut; Dipl.-Ing., D-45309 Essen (DE)
(74) Representative: Sparing, Rolf Klaus, Dipl. Wirtsch.-Ing.

(56) References cited:
- EP-A- 0 168 235
- EP-A- 0 333 493
- US-A- 4 607 963
- US-A- 5 086 220
- PATENT ABSTRACTS OF JAPAN vol. 007 no. 220 (P-226) ,30 September 1983 & JP-A-58 113729 (TOKYO SHIBAURA DENKI KK) 6 July 1983,

## Description

The present invention relates to an optical monitoring apparatus based on light transmission via light guide fibres or glass fibres.

It is known to form an image of a cross section of a flowing fluid by means of a camera, the image being captured by an optical element serving spectral dispersion, and to process the radiation so spectrally dispersed by means of a sensor array read out serially. That is, the image of the fluid cross section is "one-dimensional" or line-shaped, the inlet aperture of the camera having slot shape.

From EP-A-0 333 493 a ranger is known, wherein a light beam is scanned along a line. A set of detectors connects via light guides to sensors, in particular photo multipliers. Each detector detects a small spot along the scanning line, the spot having preferably a rectangular shape. The light inlets of the light guide bundles are disposed in a rectangular pattern, and the bundle belongs to one and the same channel. Further, the bundle at its light outlet end is conformed to illuminate the photo multiplier of said channel in a roughly circular shape. In other words, the location of a single fibre at the outlet end does not reproduce the position of the light inlet, and the light of one bundle represents one single spot.

US-A-5 086 220 discloses a row of light inlets and associated light guides and is thus an equivalent to EP-A-0 333 493.

EP-A-0 168 235 discloses rows of detectors.

PATENT ABSTRACTS OF JAPAN vol. 7 # 220, p. 226, teaches to transform a one-dimensional picture into a two-dimensional one.

It is an object of the present invention to provide an apparatus for optically monitoring a space and which is of simple design.

It is a further object of the invention to provide such apparatus adapted to determine the distribution of radiation emanating from or absorbed by a flowing fluid in a flue of a steam generator, the resolution requirements being moderate. These objects are solved by the apparatus defined in claim 1.

According to the invention, radiation is detected at inlets of glassfibres or other light guide fibres, these inlets being disposed in an array for the purpose of monitoring a space (as contrasted to a cross-section). The light guide fibres are not extended to a light sensor array of similar disposition (which would be obvious) but to at least one sensor row. This disposition permits parallel read-out of the information in real time and thus the detection of fluctuations. It is not feasible to detect such fluctuations by means of a sensor array because the latter is serially read-out and, accordingly, inherently has integrating behavior.

At inlet and/or outlet of each fibre additional optical elements may be provided, such as micro lenses, filters, prisms and the like depending on the particular application.

Embodiments of the invention are schematically illustrated in the attached drawings.

Fig. 1 shows an apparatus according to the invention for detection of radiation fluctuations.

Fig. 2 shows a detail of the light inlet in Fig. 1 as indicated by II-II in an enlarged scale.

Fig. 3 is a view similar to Fig. 2 but with a modification.

Fig. 4 shows an apparatus according to the invention for simultaneous detection of radiation fluctuations and radiation intensity in a given spectral wavelength range.

Fig. 5 illustrates a modification of the apparatus of Fig. 1, and

Fig. 6 is a section view of the modified apparatus of Fig. 5.

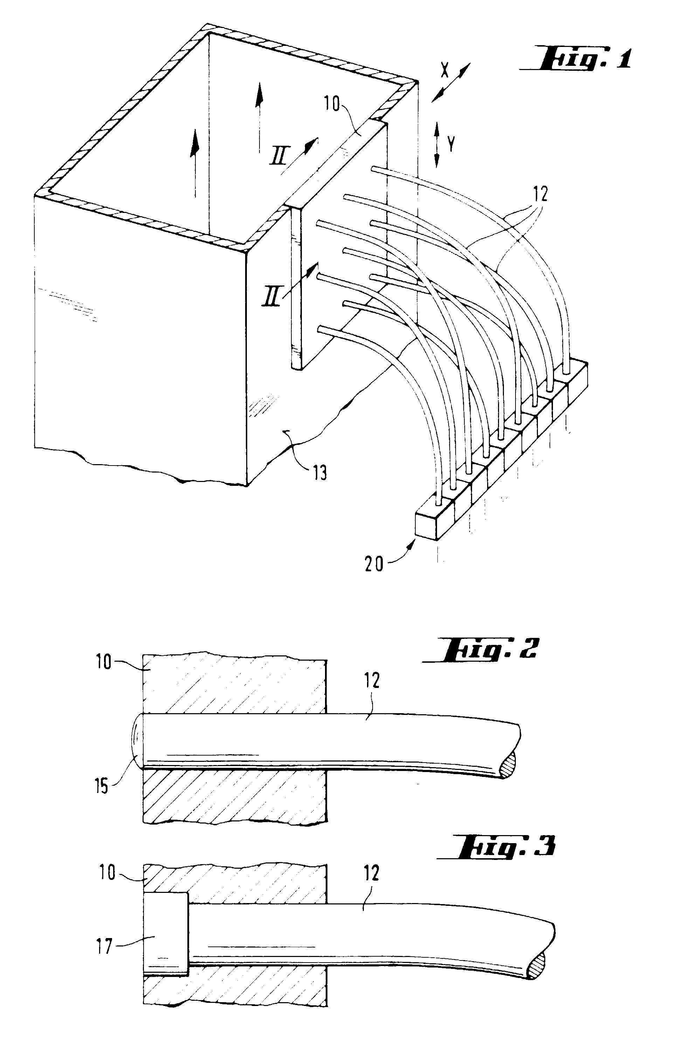

Fig. 1 shows a support 10 for nine glass fibres 12. The light inlets of the fibres are arranged in an orthogonal 3x3 array. It will be understood that the number of fibres will depend on the particular application and in general will be much higher than nine. A coordinate pair X, Y is associated with each light inlet. The light guiding fibres 12 are connected to a sensor row 20 wherein one sensor is allocated to each light guide. The sensors are read-out in parallel, and processing of their output signals is done in an electronic processor, not shown.

Support 10 is mounted in a window provided in one of the walls 13 of a flue duct of a steam generator.

The light inlets of fibres 12 may be provided with micro lenses 15, as illustrated in Fig. 2, or with filter or other optical means 17, as illustrated in Fig. 3.

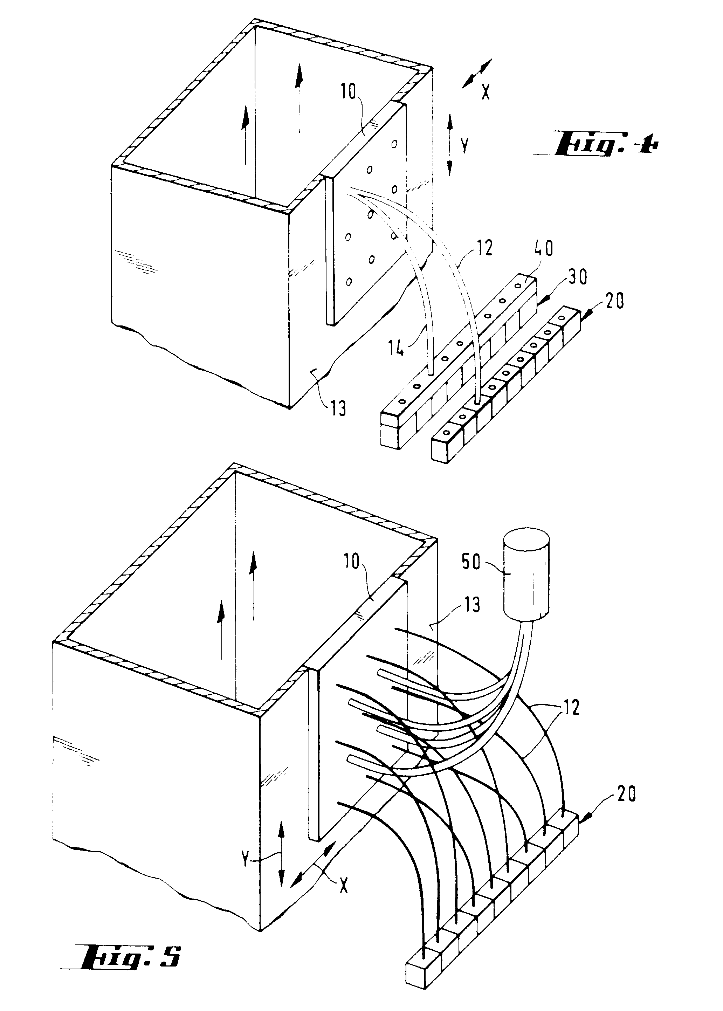

In the embodiment of Fig. 4, a pair of glass fibres 12, 14 is allocated to each site X, Y; for sake of simplicity, only one such fibre pair is shown. Similar to Fig. 1, light guide fibre 12 is connected to the allocated sensor in the sensor row 20. The second fibre 14 of the pair is connected to an allocated sensor in a second sensor row 30, but between its light outlet and the sensor an optical element 40 for spectral dispersion is disposed so that only a desired section of the spectrum hits the sensor. This optical element may be of a known type, as a prism, a filter, a diffraction gap or the like. The invention is not limited to only two rows; instead of two light guides per coordinate point, three or more may be provided in order to detect a plurality of spectral sections by means of a third, fourth ... sensor row. Also, instead of a second sensor row, a sensor array may be provided, the rows of which will then be read-out serially.

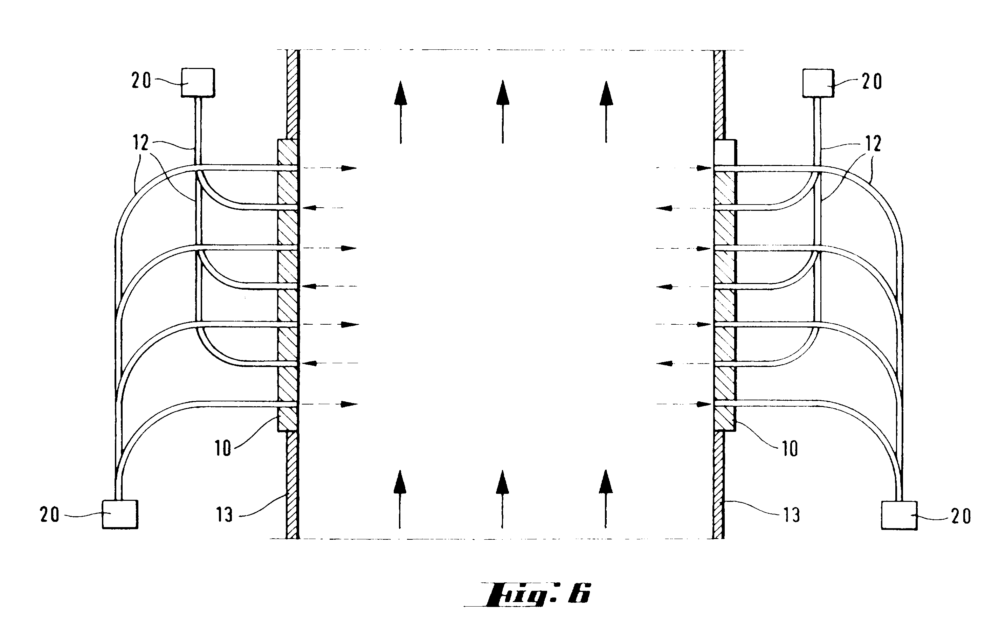

In the embodiment of Fig. 5 and 6, the apparatus comprises a light transmitter end and a light receiver end. At the transmitter end, the sensor rows are replaced with rows of light emitting diodes so that the light is not received at the array but emitted, the light source 50 being indicated as a block. At the receiver end, the system of Fig. 1 is used. In this manner, instead of radiation emanating from the flue gas its absorption of the laser output is detected.

As illustrated in Fig. 6, opposite transmitter/receiver ends may be provided wherein the light inlet of a receiver fibre captures the light emitted by the opposite light outlet and attenuated because of absorption. As shown, transmitters and receivers are provided at both sides.

## Claims

1. An optical space monitoring apparatus based on light transmission via first light guiding fibres (12), wherein light inlets of said fibres (12) are disposed in a two-dimensional array while outlets of the fibres (12) are connected to a first sensor row (20) which is read-out in parallel, and wherein each of the inlets of the two-dimensional array of the first light guiding fibres (12) is connected to a separate detector element of the sensor row (20).

2. The apparatus of claim 1, wherein micro lenses (15) are disposed in front of the light inlets.

3. The apparatus of claim 1, wherein filters (17) are disposed in front of said light inlets, said filters (17) serving to attenuate predetermined wave length ranges.

4. The apparatus of claim 1, wherein an optical element (40) for spectral dispersion is disposed between said light outlets and said sensors so as to subject said sensors to a fraction of the light spectrum only.

5. The apparatus of claim 4 including second light guiding fibres (14) disposed adjacent said first light guiding fibres (12) and directly connected to a sensor of a second sensor row (30).

6. Use of an apparatus defined by claim 1 for detection of radiation emanating from a flowing fluid.

7. Use of an apparatus defined by claim 1 for detection of radiation absorbed by a flowing fluid.

8. Use of an apparatus defined by claim 1 for monitoring radiation emanating from a flame.

9. The apparatus of claim 1, wherein light outlets of second light guiding fibres (14) are disposed in said array, light inlets of said second fibres (14) being coupled to a light source (50).

10. Use of the apparatus of claim 9 such that two such identical apparatuses are disposed on a channel through which a fluid flows, the apparatuses facing one another.

## Patentansprüche

1. Optische Raumüberwachungsvorrichtung, basierend auf Lichtübertragung über erste Lichtleiffasern (12), wobei Lichteinlässe der Fasern (12) in einer zweidimensionalen Matrix angeordnet sind, während Auslässe der Fasern (12) mit einer ersten Sensorzeile (20) verbunden sind, die parallel ausgelesen wird, und wobei jeder der Einlässe der zweidimensionalen Matrix von ersten Lichtleiffasern (12) mit einem getrennten Detektorelement der Sensorzeile (20) verbunden ist.

2. Vorrichtung nach Anspruch 1, bei der Mikrolinsen (15) vor den Lichteinlässen angeordnet sind.

3. Vorrichtung nach Anspruch 1, bei der Filter (17) vor den Lichteinlässen angeordnet sind, welche Filter (17) zum Dämpfen vorbestimmter Wellenlängenbereiche dienen.

4. Vorrichtung nach Anspruch 1, bei der ein optisches Spektralzerlegungselement (40) zwischen den Lichtauslässen und den Sensoren angeordnet ist, um die Sensoren nur einem Teil des Lichtspektrums auszusetzen.

5. Vorrichtung nach Anspruch 4 mit zweiten Lichtleiffasern (14), die neben den ersten Lichtleiffasern (12) angeordnet und direkt mit einem Sensor einer zweiten Sensorzeile (30) verbunden sind.

6. Verwendung der Vorrichtung nach Anspruch 1 für die Erfassung von von einem strömenden Fluid ausgehender Strahlung.

7. Verwendung der Vorrichtung nach Anspruch 1 für die Erfassung von von einem strömenden Fluid absorbierter Strahlung.

8. Verwendung der Vorrichtung nach Anspruch 1 für die Überwachung von von einer Flamme ausgehender Strahlung.

9. Vorrichtung nach Anspruch 1, bei der in der Matrix Lichtausgänge zweiter Lichtleitfasern (14) angeordnet sind, wobei Lichteingänge der zweiten Fasern (14) an eine Lichtquelle (50) gekoppelt sind.

10. Verwendung der Vorrichtung nach Anspruch 9 derart, daß zwei solcher identischer Vorrichtungen an einer von einem Fluid durchströmten Kanal angeordnet sind, welche Vorrichtungen einander zugekehrt sind.

## Revendications

1. Dispositif optique de surveillance d'espace basé sur la transmission de la lumière par de premières fibres optiques (**12**), dans lequel les entrées de lumière desdites fibres (**12**) sont disposées selon un réseau bidimensionnel tandis que les sorties des fibres (**12**) sont reliées à une première rangée de capteurs (**20**) qui est lue en parallèle, et dans lequel chacune des entrées du réseau bidimensionnel des premières fibres optiques (**12**) est reliée à un élément détecteur séparé de la rangée de capteurs (**20**).

2. Dispositif selon la revendication 1, dans lequel des micro-lentilles (**15**) sont placées devant les entrées de lumière.

3. Dispositif selon la revendication 1, dans lequel des filtres (**17**) sont placés devant lesdites entrées de lumière, lesdits filtres (**17**) servant à atténuer des plages de longueur d'onde déterminées.

4. Dispositif selon la revendication 1, dans lequel un élément optique (**40**) de dispersion spectrale est placé entre lesdites sorties et lesdits capteurs pour exposer lesdits capteurs à une fraction du spectre lumineux seulement.

5. Dispositif selon la revendication 4, comprenant des deuxièmes fibres optiques (**14**) disposées adjacentes auxdites premières fibres optiques (**12**) et connectées directement à un capteur d'une deuxième rangée de capteurs (**30**).

6. Utilisation d'un dispositif défini par la revendication 1 pour détecter un rayonnement émanant d'un fluide en écoulement.

7. Utilisation d'un dispositif défini par la revendication 1 pour détecter un rayonnement absorbé par un fluide en écoulement.

8. Utilisation d'un dispositif défini par la revendication 1 pour détecter un rayonnement émanant d'une flamme.

9. Dispositif selon la revendication 1, dans lequel les sorties de lumière desdites deuxièmes fibres optiques (**14**) sont disposées dans ledit réseau, les entrées de lumière desdites deuxièmes fibres (**14**) étant couplées à une source de lumière (**50**).

10. Utilisation du dispositif de la revendication 9 de telle sorte que deux dispositifs identiques de ce type son placés sur un canal à travers lequel s'écoule un fluide, les dispositifs se faisant face.
